(19) Europäisches Patentamt
European Patent Office
Office européen des brevets

(11) **EP 4 051 745 B1**

(12) **EUROPEAN PATENT SPECIFICATION**

(45) Date of publication and mention
of the grant of the patent:
**26.11.2025 Bulletin 2025/48**

(21) Application number: **20800338.4**

(22) Date of filing: **23.10.2020**

(51) International Patent Classification (IPC):
*C09J 133/08* (2006.01)    *H04R 7/00* (2006.01)
*C08L 33/08* (2006.01)    *C08F 220/18* (2006.01)

(52) Cooperative Patent Classification (CPC):
(C-Sets available)
**H04R 7/00; C09J 133/08;** C08F 220/18;
C08F 220/1804; C08F 220/1808; C08L 2205/025;
H04R 2307/025                              (Cont.)

(86) International application number:
**PCT/IB2020/059974**

(87) International publication number:
**WO 2021/084393 (06.05.2021 Gazette 2021/18)**

(54) **ACRYLIC DAMPING ADHESIVE AND DIAPHRAGM MEMBRANE FOR MICRO-SPEAKERS**

DÄMPFENDER ACRYLKLEBSTOFF UND DIAPHRAGM-MEMBRAN FÜR MIKROLAUTSPRECHER

ADHÉSIF D'AMORTISSEMENT ACRYLIQUE ET MEMBRANE À DIAPHRAGME POUR MICRO-HAUTPARLEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2019 CN 201911051505**

(43) Date of publication of application:
**07.09.2022 Bulletin 2022/36**

(73) Proprietor: **3M Innovative Properties Company Saint Paul, Minnesota 55133-3427 (US)**

(72) Inventors:
• **YANG, Chao**
**Shanghai 200123 (CN)**
• **LIU, Hongbo**
**Shanghai 201620 (CN)**
• **LIN, Panpan**
**Shanghai 201111 (CN)**
• **DUAN, Qiong Juan**
**Shanghai 201622 (CN)**

(74) Representative: **Vossius & Partner Patentanwälte Rechtsanwälte mbB Siebertstraße 4 81675 München (DE)**

(56) References cited:
**WO-A1-2014/052463    WO-A1-2015/132042
WO-A1-2017/116723    WO-A1-2017/123488
JP-A- 2020 083 940**

(52) Cooperative Patent Classification (CPC): (Cont.)

C-Sets
**C09J 133/08, C08K 5/0091, C08L 33/064;**
**C09J 133/08, C08K 5/1515, C08L 33/064;**
**C09J 133/08, C08K 5/29, C08L 33/064;**

**C09J 133/08, C08K 5/3432, C08L 33/064;**
C08F 220/18, C08F 220/06, C08F 220/1804;
C08F 220/1804, C08F 220/06, C08F 220/1808;
C08F 220/1808, C08F 220/06;
C08F 220/1808, C08F 220/06, C08F 220/14

**Description**

TECHNICAL FIELD

The present invention relates to the technical field of acoustical devices, and in particular, the present invention provides an acrylic damping adhesive and a diaphragm membrane for microspeakers.

BACKGROUND

With the rapid development of the cellphone industry, customer demands for cellphone multimedia applications are constantly growing, thus having an impact on further requirements and improvements for cellphone sound quality. A micro-speaker functions as a sound-producing member of a cellphone; the quality thereof directly determines cellphone multimedia sound effects. The sound-producing principle of micro-speakers is as follows: the voice coil pushes the diaphragm membrane to vibrate under the action of electromagnetic force, and then pushes air to produce sounds. Diaphragm membrane vibration stability directly determines micro-speaker sound quality.

In the early stages, diaphragm membranes of micro-speakers usually employed mono-layer plastic film sheets, including, for example, polypropylene (PP) films, polyethylene terephthalate (PET) films, polyimide (PI) films, polyethylene naphthalate (PEN) films, etc. With the increase of end-user requirements for micro-speaker sound quality, the following multi-layer composite film structures have gradually appeared: three-layer film, five-layer film and seven-layer film structures. In the structural design of multi-layer films, damping adhesive layers are used and mainly function to improve diaphragm membrane vibration stability, control film f0, and reduce distortion so as to improve sound quality. Materials typically employed in damping adhesive layers include acrylic damping adhesives, silicone damping pressure sensitive adhesives, and the like.

WO 2014/052463 A1 describes adhesive compositions useful for damping vibration that include a combination of at least two partially immiscible acrylic polymers such that the compositions exhibit at least two distinct glass transition temperatures.

However, pressure sensitive adhesives that are currently in the industry generally suffer from problems of relatively narrow damping temperature ranges (concentrated in the range of -20 to 0 °C); mismatch of damping conditions with micro-speaker working conditions; and low frequency response of damping. Therefore, developing a damping adhesive with a wide damping temperature range will be of great significance.

SUMMARY

Starting from the technical problems stated above, the present invention aims to provide an acrylic damping adhesive. The acrylic damping adhesive has a wider damping temperature range (the damping temperature range is greater than or equal to 50 °C, and preferably greater than or equal to 90 °C), a higher frequency response of damping, double damping peaks in the rheological curve, and higher system stability.

After intensive and detailed research, the present inventors have completed the present invention. According to one aspect of the present invention, an acrylic damping adhesive is provided. The acrylic damping adhesive comprises a crosslinked structure of a carboxy-containing acrylic polymer with a glass transition temperature less than or equal to -20 °C and a carboxy-containing acrylic polymer with a glass transition temperature ranging from 20 °C to 50 °C , wherein the carboxy-containing acrylic polymer with a glass transition temperature ranging from 20°C to 50°C is obtained by polymerization of an acrylic monomer, referred to as "second acrylic monomer" in this specification, and acrylic acid, and based on the total amount of the second acrylic monomer and the acrylic acid as 100 wt.-%, the acrylic acid accounts for 15 to 25 wt.-%.

According to some preferred embodiments of the present invention, the acrylic damping adhesive exhibits double damping peaks in the rheological curve.

According to some preferred embodiments of the present invention, the damping temperature range of the acrylic damping adhesive is greater than or equal to 50 °C.

According to some preferred embodiments of the present invention, in the crosslinked structure, based on the weight of the crosslinked structure as 100%, a structural unit derived from the carboxy-containing acrylic polymer with a glass transition temperature less than or equal to -20 °C accounts for 25 to 75 wt%, and a structural unit derived from the carboxy-containing acrylic polymer with a glass transition temperature ranging from 20 °C to 50 °C accounts for 25 to 75 wt%.

According to some preferred embodiments of the present invention, the carboxy-containing acrylic polymer with a glass transition temperature less than or equal to -20 °C is obtained by polymerization of a "first acrylic monomer" and acrylic acid, and based on the total amount of the first acrylic monomer and the acrylic acid as 100 wt%, the acrylic acid accounts for 0.5 to 5 wt%.

3

According to some preferred embodiments of the present invention, the first acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate.

According to some preferred embodiments of the present invention, the second acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate.

According to some preferred embodiments of the present invention, the carboxy-containing acrylic polymer with a glass transition temperature ranging from 20 °C to 50 °C has a number average molecular weight greater than or equal to $1 \times 10^6$.

According to another aspect of the present invention, a diaphragm membrane for micro-speakers is provided. The diaphragm membrane comprises a damping adhesive layer, the damping adhesive layer comprising the acrylic damping adhesive as described above.

According to some preferred embodiments of the present invention, the thickness of the damping adhesive layer is in the range of 3 to 50 $\mu$m.

Compared with the prior art in the art, the present invention has the following advantages: the acrylic damping adhesive according to the technical solutions of the present invention has a wider damping temperature range (the damping temperature range is greater than or equal to 50 °C, and preferably greater than or equal to 90 °C); overcomes the problem of mismatch of damping conditions with micro-speaker working conditions; and has a higher frequency response of damping, exhibits double damping peaks in the rheological curve, and has higher system stability.

BRIEF DESCRIPTION OF THE DRAWINGS

FIG. 1 shows a diagram of the rheological curve of the damping adhesive layer according to Embodiment 1 of the present invention;
FIG. 2 shows a diagram of the rheological curve of the damping adhesive layer according to Embodiment 2 of the present invention;
FIG. 3 shows a diagram of the rheological curve of the damping adhesive layer according to Embodiment 3 of the present invention;
FIG. 4 shows a diagram of the rheological curve of the damping adhesive layer according to Embodiment 4 of the present invention; and
FIG. 5 shows a diagram of the rheological curve of the damping adhesive layer according to Embodiment 5 of the present invention.

DETAILED DESCRIPTION

In micro-speakers that are currently used, a linear relationship between the glass transition temperature of the damping adhesive of the diaphragm membrane and its corresponding frequency exists. The commonly used damping adhesive only exhibits one damping peak in the rheological curve, and thus its corresponding working frequency is only within a limited range. However, the working frequency range of micro-speakers in cellphones is usually 100 Hz to 20000 Hz; especially for micro-speakers in the low frequency range of 100 Hz to 2000 Hz, a damping adhesive is needed to achieve functions. However, the damping adhesive with only one damping peak cannot meet working frequency range requirements because the damping temperature range is too narrow.

According to one aspect of the present invention, an acrylic damping adhesive with a double-peak system is provided, the adhesive having wide damping temperature range (damping temperature range is greater than or equal to 50 °C, and preferably greater than or equal to 90 °C) and rapid frequency response.

Specifically, the acrylic damping adhesive includes a crosslinked structure of a carboxy-containing acrylic polymer with a glass transition temperature less than or equal to -20 °C (hereinafter sometimes referred to as "acrylic polymer A") and a carboxy-containing acrylic polymer with a glass transition temperature ranging from 20 °C to 50 °C (hereinafter sometimes referred to as "acrylic polymer B"). According to the technical solutions of the present invention, two different carboxy-containing acrylic polymers (i.e., acrylic polymer A and acrylic polymer B) with different glass transition temperature ranges can be crosslinked by at least one crosslinker, such that a crosslinked polymer exhibiting double damping peaks in the rheological curve can be obtained. The crosslinked polymer exhibiting double damping peaks in the rheological curve has a wide damping temperature range (the damping temperature range is greater than or equal to 50 °C) due to the presence of double damping peaks, thereby resulting in high frequency response of damping. In addition, the crosslinked polymer further has high system stability.

The "rheological curve" according to the present invention is measured with an Ares G2 rheometer produced by TA Corporation (USA), in which 8-inch (20.32 cm) parallel plate clamps are selected to clamp an acrylic damping adhesive sample with a thickness of 1 mm. When the heating rate is 3 °C/min, the test frequency is 1 Hz, and the strain is less than or equal to 1%, rheological measurement is performed in the temperature range of -50 °C to 150 °C using temperature scanning, so as to obtain the storage modulus G' and loss modulus G". The loss factor value (i.e., the damping value) tan δ is calculated from the storage modulus G' and loss modulus G" according to the following formula:

$$\tan \delta = G''/G'.$$

According to the above measuring method for rheological curves, each loss factor value (i.e., the damping value) tan δ in the temperature range of -50 °C to 150 °C constitutes the damping curve.

In the present invention, unless specified otherwise, the term "damping temperature range" refers to the temperature range of the damping curve of the sheet prepared by the acrylic damping adhesive measured according to the rheological curve when the damping value is greater than 0.2 (preferably greater than 0.3). According to the technical solutions of the present invention, the damping temperature range of the acrylic damping adhesive is greater than or equal to 50 °C, and preferably greater than or equal to 90 °C.

In the present invention, unless specified otherwise, the term "damping peak" refers to the wave peak in the damping curve obtained according to the above rheological testing method.

According to some embodiments of the present invention, the acrylic damping adhesive exhibits double damping peaks in the rheological curve. Preferably, the double damping peaks include a low-temperature region (below -20 °C) and a high-temperature region (20 °C to 50 °C). By setting two damping peaks in the low-temperature region (below -20 °C) and the high-temperature region (20 °C to 50 °C) as described above, effective damping characteristics can be provided in a wide frequency range; vibration stability can be controlled; and sound quality distortion can be reduced. Compared with the damping adhesives commonly used in the prior art, the acrylic damping adhesive according to the technical solutions of the present invention has a greatly widened damping temperature range (the damping temperature range is greater than or equal to 50 °C).

According to some embodiments of the present invention, in the crosslinked structure, based on the weight of the crosslinked structure as 100%, the structural unit derived from the carboxy-containing acrylic polymer with a glass transition temperature less than or equal to -20 °C accounts for 25 to 75 wt%; the structural unit derived from the carboxy-containing acrylic polymer with a glass transition temperature ranging from 20 °C to 50 °C accounts for 25 to 75 wt%.

According to some embodiments of the present invention, the carboxy-containing acrylic polymer with a glass transition temperature less than or equal to -20 °C (acrylic polymer A) is obtained by polymerization of a first acrylic monomer and acrylic acid, and based on the total amount of the first acrylic monomer and acrylic acid as 100 wt%, the acrylic acid accounts for 0.5 to 5 wt%. There is no special restriction on the polymerization mode of the first acrylic monomer and acrylic acid for preparing the acrylic polymer A. In the polymerization process, initiators can be optionally added to initiate the polymerization between the two substances. Preferably, the first acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate.

According to some embodiments of the present invention, the carboxy-containing acrylic polymer with a glass transition temperature ranging from 20 °C to 50 °C (acrylic polymer B) is obtained by polymerization of a second acrylic monomer and acrylic acid, and based on the total amount of the second acrylic monomer and acrylic acid as 100 wt%, the acrylic acid accounts for 15 to 25 wt%. There is no special restriction on the polymerization mode of the second acrylic monomer and acrylic acid for preparing the acrylic polymer B. In the polymerization process, initiators can be optionally added to initiate the polymerization between the two substances. Preferably, the second acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate . The second acrylic monomer may be identical with or different from the first acrylic monomer. Preferably, in order to improve the system stability of the acrylic damping adhesive to avoid phase separation, the carboxy-containing acrylic polymer with a glass transition temperature ranging from 20 °C to 50 °C (acrylic polymer B) has a number average molecular weight greater than or equal to $1 \times 10^6$.

According to some embodiments of the present invention, the acrylic damping adhesive is obtained by crosslinking acrylic polymer A, acrylic polymer B, and optionally one or a plurality of other additives described above through the use of at least one crosslinker. There is no specific restriction on the particular type of the crosslinker that can be used in the present invention, as long as the crosslinker can effectively initiate the crosslinking of acrylic polymer A and acrylic polymer B. Preferably, the crosslinker includes, but is not limited to, nitrogen pyridine crosslinkers, epoxy crosslinkers and metal-ion crosslinkers . Preferred examples of the crosslinker include: double-nitrogen pyridine, aluminium acetylacetone, epoxy crosslinker CX-100, and isocyanate Preferably, based on the total weight of the acrylic damping adhesive obtained, the crosslinker is added in an amount ranging from 0.15 to 0.2 wt%.

According to another aspect of the present invention, a diaphragm membrane for micro-speakers is provided.

The diaphragm membrane includes a damping adhesive layer comprising the acrylic damping adhesive as described above. In order to achieve a desirable damping effect, the thickness of the damping adhesive layer is in the range of 3 to 50 $\mu$m. Preferably, the diaphragm membrane for micro-speakers has a multi-layer film structure. According to some preferred embodiments of the present invention, the diaphragm membrane may have a three-layer structure, or alternatively a five-layer structure. The diaphragm membrane with a three-layer structure has a plastic sheet, a damping adhesive, and a plastic sheet successively from top to bottom, where the plastic sheet may be a polyetheretherketone (PEEK) film or a polyethylene naphthalate (PEN) film. The diaphragm membrane with a five-layer structure has a plastic sheet, a damping adhesive, a plastic sheet, a damping adhesive, and a plastic sheet successively from top to bottom, where the plastic sheet may be a polyetheretherketone (PEEK) film or a polyethylene naphthalate (PEN) film

The present invention will be further described below in more detail in combination with the embodiments. It needs to point out that, these descriptions and embodiments are all intended to make the invention easy to understand rather than to limit the invention. The protection scope of the present invention is subject to the appended claims.

## Embodiments

In the present invention, unless otherwise noted, the reagents used are all commercially available products, which are directly used without further purification. In addition, the mentioned "parts" are "parts by weight."

Raw materials used in Examples and Comparative Examples are summarized in Table 1.

Table 1

| Model | Description | Supplier |
|---|---|---|
| IOA | isooctyl acrylate | Exxon mobile US |
| MA | methyl acrylate | BASF China |
| BA | butyl acrylate | BASF China |
| AA | acrylic acid | Sinoreagent China |
| IPA | isopropanol | Sinoreagent China |
| EA | ethyl acetate | Sinoreagent China |
| - | aluminum acetylacetone | Sinoreagent China |
| - | double-nitrogen pyridine | Sinoreagent China |
| BPO | benzoyl peroxide | Sinoreagent China |

### Testing Method

### Rheological Curve

The rheological curve properties of acrylic damping adhesives prepared in the following embodiments and comparative examples are measured respectively by the following method. Specifically, an Ares G2 rotary rheometer produced by TA Corporation (USA) is used to measure the rheological curve. First, acrylic damping adhesive samples with a thickness of 1 mm were clamped with 8-inch (20.32 cm) parallel plate clamps respectively. Subsequently, when the heating rate is 3 °C/min, the test frequency is 1 Hz, and the strain is less than or equal to 1%, rheological measurement is performed in the temperature range of -50 °C to 150 °C using temperature scanning, to obtain the storage modulus G" and loss modulus G". The loss factor value (i.e., the damping value) tan $\delta$ is calculated from the storage modulus G' and loss modulus G" according to the following formula:

$$\tan \delta = G''/G'.$$

According to the above measuring method for rheological curves, each loss factor value (i.e., the damping value) tan $\delta$ in the temperature range of -50 °C to 150 °C constitutes the damping curve.

### Double-Phase System Stability

In order to evaluate double-phase system stability in the acrylic damping adhesive prepared in the following embodiments and comparative examples, static shear tests are carried out respectively on the acrylic damping adhesives prepared in each embodiment and comparative example. Specifically, at the ambient temperature of 25 °C, a standard sample with a length of 1 inch (= 2.54 cm), a width of 1 inch, and a thickness of 50 $\mu$m is taken; the sample is then attached between two pieces of 1 ×1 inch S304 stainless steel sheets. Then a 100 g weight is hung on the outside of one of the attached S304 stainless steel sheets. Observation is performed within a time range of 1000 min. If the weight does not fall off during this period, the stability of the double-phase system is evaluated as good; and if the weight falls off during this period, the stability of the double-phase system is evaluated as unacceptable.

**Glass Transition Temperature**

The glass transition temperature of each acrylic polymer A and acrylic polymer B prepared in the following embodiments and comparative example is measured by the following method. The glass transition temperatures defined by the present invention are all based on rheological data, where the temperature corresponding to the maximum value of the loss factor is taken as the glass transition temperature.

**Embodiment 1**

Preparation of acrylic polymer A: in a 1 L reactor, the following were added to obtain a reaction mixture: 200 g of monomers (including 26.5 wt% of isooctyl acrylate, 70 wt% of butyl acrylate and 3.5 wt% of acrylic acid, based on the total weight of the monomers as 100%), 5 g of isopropanol as a chain transfer agent and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A with a solid content of 40 wt%. The glass transition temperature of the acrylic polymer A measured by the testing method for glass transition temperature as described above was -30 °C.

Preparation of acrylic polymer B: in a 1 L reactor, the following were added to obtain a reaction mixture: 200 g of monomers (including 81 wt% of isooctyl acrylate and 19 wt% of acrylic acid, based on the total weight of the monomers as 100%), and 300 g of ethyl. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B with a solid content of 20 wt%. The glass transition temperature of the acrylic polymer B measured by the testing method for glass transition temperature as described above was 30 °C. The acrylic polymer B had a number average molecular weight of $1.3 \times 10^6$.

Preparation of the acrylic damping adhesive: in a mixing reactor, the following were added: solution containing acrylic polymer A and the solution containing acrylic polymer B prepared by the above steps, as well as double-nitrogen pyridine and aluminum acetylacetone, where based on the weight of the acrylic damping adhesive to be prepared as 100%, the amount of acrylic polymer A in the solution containing acrylic polymer A was 44.85 wt%; the amount of acrylic polymer B in the solution containing acrylic polymer B was 54.95 wt%; the amount of double-nitrogen pyridine was 0.05 wt%; and the amount of aluminum acetylacetonate was 0.15 wt%. The mixture obtained was stirred for 30 min at 25 °C. Subsequently, the mixture after polymerization was uniformly coated in a thickness of 50 $\mu$m onto a PET release film via a roll coating method. Then the obtained coating was dried for 5 min at 105 °C, to obtain a damping adhesive layer.

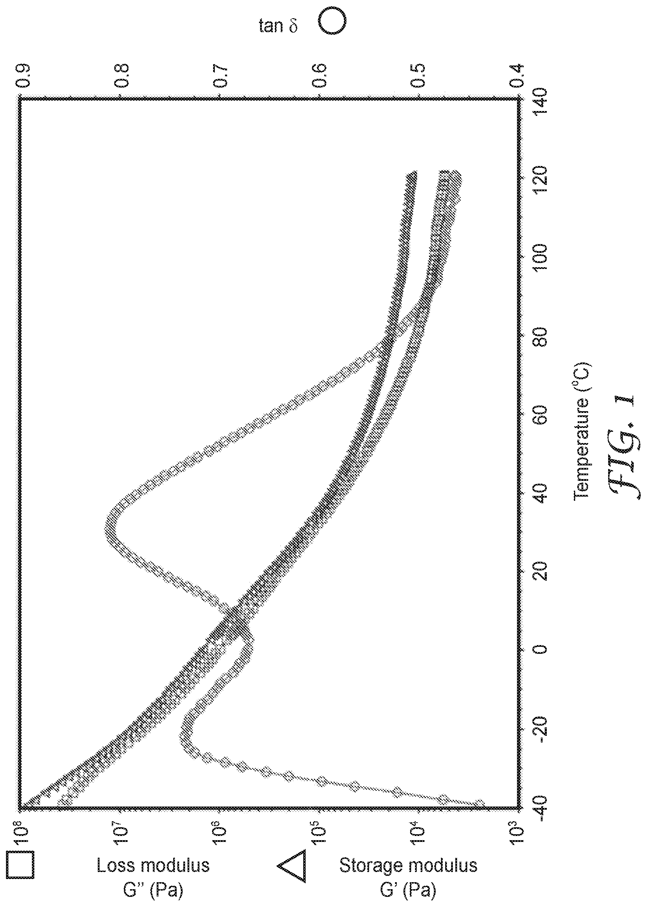

The damping adhesive layer prepared above was tested according to the measuring method for rheological curves as described above. FIG. 1 shows a diagram of the rheological curve of the damping adhesive layer according to Embodiment 1 of the present invention. Results show that the damping adhesive exhibited a stable double-damping peak characteristic in the rheological curve. The results are characterized by loss factors all greater than 0.5 at -30 °C to 70 °C.

The damping adhesive layer prepared above was tested according to the measuring method for double-phase system stability as described above. Results show that the 100 g weight did not fall off within 1000 min, indicating that the damping adhesive has good double-phase system stability.

**Embodiment 2**

Preparation of acrylic polymer A: in a 1 L reactor, the following were added to obtain a reaction mixture: 200 g of monomers (including 80 wt% of isooctyl acrylate, 18 wt% of methyl acrylate and 2 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was -35 °C.

Preparation of acrylic polymer B: in a 1 L reactor, the following were added to obtain a reaction mixture: 200 g of monomers (including 77 wt% of isooctyl acrylate and 23 wt% of acrylic acid, based on the total weight of the monomers as 100%) and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 45 °C. The acrylic polymer B had a number average molecular weight of $2 \times 10^6$.

Preparation of the acrylic damping adhesive: in a mixing reactor, the following were added: solution containing acrylic polymer A and the solution containing acrylic polymer B prepared by the above steps, as well as aluminum acetylacetone, where based on the weight of the acrylic damping adhesive to be prepared as 100%, the amount of acrylic polymer A in the solution containing acrylic polymer A was 25 wt%; the amount of acrylic polymer B in the solution containing acrylic polymer B was 74.85 wt%; and the amount of aluminum acetylacetonate was 0.15 wt%. The mixture obtained was stirred for 30 min at 25 °C. Subsequently, the mixture after polymerization was uniformly coated in a thickness of 50 μm onto a PET release film via a roll coating method. Then the obtained coating was dried for 5 min at 105 °C, to obtain a damping adhesive layer.

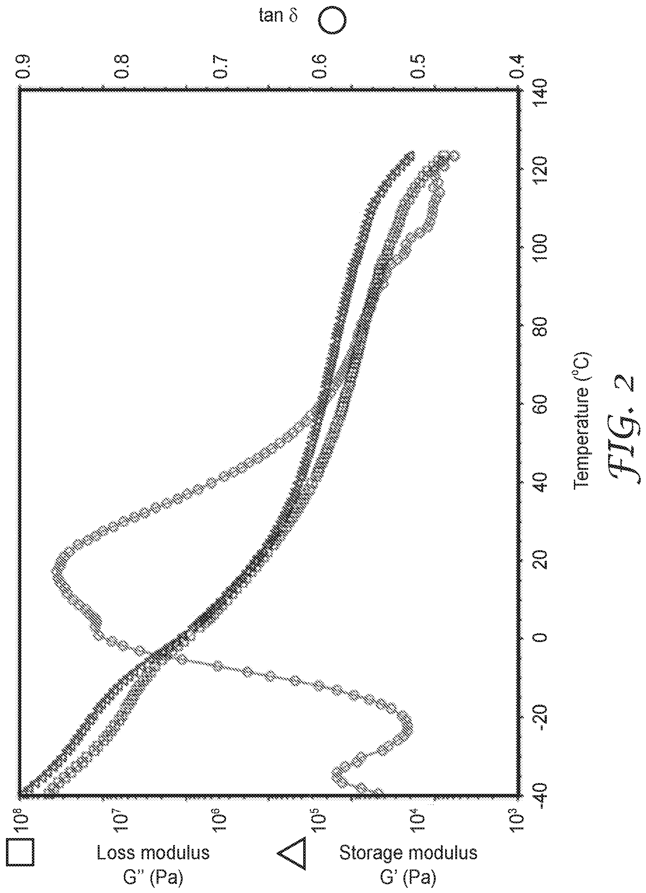

The damping adhesive layer prepared above was tested according to the measuring method for rheological curves as described above. FIG. 2 shows a diagram of the rheological curve of the damping adhesive layer according to Embodiment 2 of the present invention. Results show that the damping adhesive exhibited a stable double-damping peak characteristic in the rheological curve. The results are characterized by loss factors all greater than 0.3 at -30 °C to 60 °C.

The damping adhesive layer prepared above was tested according to the measuring method for double-phase system stability as described above. Results show that the 100 g weight did not fall off within 1000 min, indicating that the damping adhesive has good double-phase system stability.

**Embodiment 3**

Preparation of acrylic polymer A: in a 1 L reactor, the following were added to obtain a reaction mixture: 200 g of monomers (including 80 wt% of isooctyl acrylate, 19 wt% of methyl acrylate and 1 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was -28 °C.

Preparation of acrylic polymer B: the following were added to obtain a reaction mixture: in a 1 L reactor, 200 g of monomers (including 75 wt% of isooctyl acrylate and 25 wt% of acrylic acid, based on the total weight of the monomers as 100%) and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 50 °C. The acrylic polymer B had a number average molecular weight of $2 \times 10^6$.

Preparation of the acrylic damping adhesive: in a mixing reactor, the following were added: the solution containing acrylic polymer A and the solution containing acrylic polymer B prepared by the above steps, as well as aluminum acetylacetone, where based on the weight of the acrylic damping adhesive to be prepared as 100%, the amount of acrylic polymer A in the solution containing acrylic polymer A was 74.85 wt%; the amount of acrylic polymer B in the solution containing acrylic polymer B was 25 wt%; and the amount of aluminum acetylacetonate was 0.15 wt%. The mixture after polymerization was uniformly coated in a thickness of 50 μm onto a PET release film via a roll coating method. Then the obtained coating was dried for 5 min at 105 °C, to obtain a damping adhesive layer.

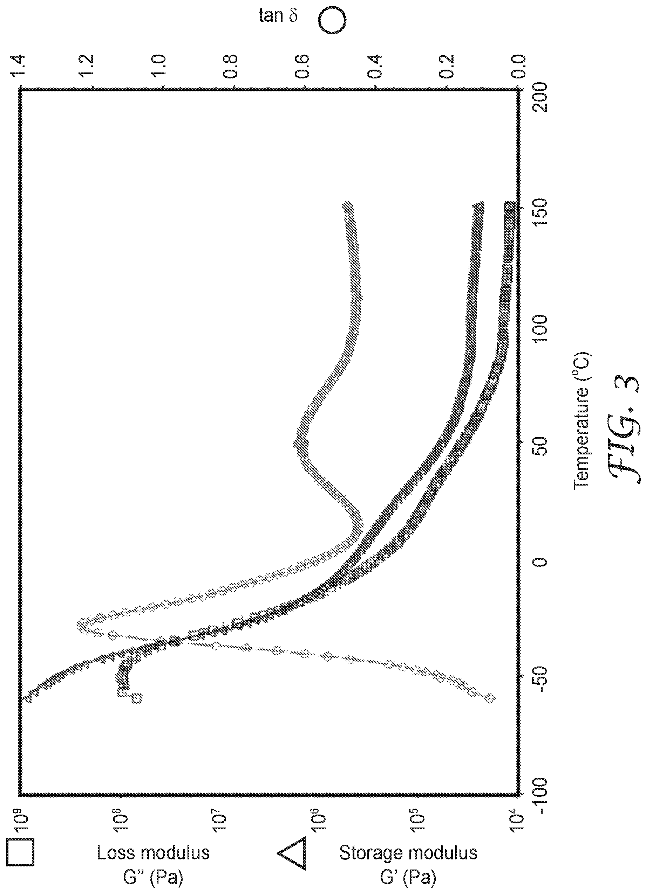

The damping adhesive layer prepared above was tested according to the measuring method for rheological curves as described above. FIG. 3 shows a diagram of the rheological curve of the damping adhesive layer according to Embodiment 3 of the present invention. Results show that the damping adhesive exhibited a stable double-damping peak characteristic in the rheological curve. It is characterized by loss factors all greater than 0.3 at -35 °C to 70 °C. The damping adhesive layer prepared above was tested according to the measuring method for double-phase system stability as described above. Results show that the 100 g weight did not fall off within 1000 min, indicating that the damping adhesive has good double-phase system stability.

**Embodiment 4**

Preparation of acrylic polymer A: in a 1 L reactor, the following were added to obtain a reaction mixture: 200 g of monomers (including 80 wt% of isooctyl acrylate, 18.5 wt% of methyl acrylate and 1.5 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was -25 °C.

Preparation of acrylic polymer B: in a 1 L reactor, the following were added to obtain a reaction mixture: 200 g of monomers (including 85 wt% of isooctyl acrylate and 15 wt% of acrylic acid, based on the total weight of the monomers as 100%), and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 20 °C. The acrylic polymer B had a number average molecular weight of $2 \times 10^6$.

Preparation of the acrylic damping adhesive: in a mixing reactor, the following were added: the solution containing acrylic polymer A and the solution containing acrylic polymer B prepared by the above steps, as well as an epoxy crosslinker CX-100, where based on the weight of the acrylic damping adhesive to be prepared as 100%, the amount of acrylic polymer A in the solution containing acrylic polymer A was 30 wt%; the amount of acrylic polymer B in the solution containing acrylic polymer B was 69.85 wt%; and the amount of the epoxy crosslinker CX-100 was 0.15 wt%. The mixture obtained was stirred for 30 min at 25 °C. The mixture after polymerization was uniformly coated in a thickness of 50 $\mu$m onto a PET release film via a roll coating method. Then the obtained coating was dried for 5 min at 105 °C, to obtain a damping adhesive layer.

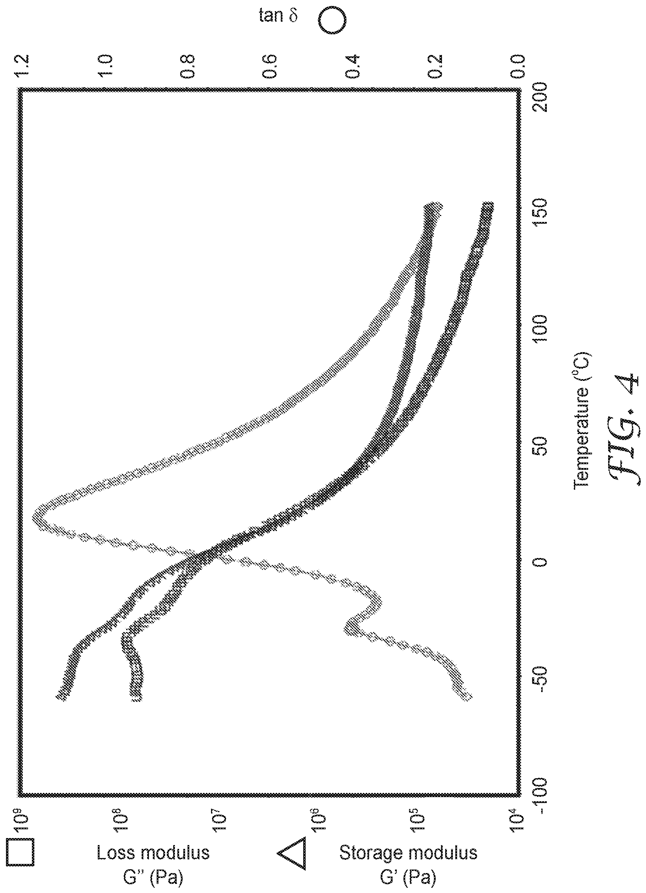

The damping adhesive layer prepared above was tested according to the measuring method for rheological curves as described above. FIG. 4 shows a diagram of the rheological curve of the damping adhesive layer according to Embodiment 4 of the present invention. Results show that the damping adhesive exhibited a stable double-damping peak characteristic in the rheological curve. The results are characterized by loss factors all greater than 0.3 at -35 °C to 60 °C.

The damping adhesive layer prepared above was tested according to the measuring method for double-phase system stability as described above. Results show that the 100 g weight did not fall off within 1000 min, indicating that the damping adhesive has good double-phase system stability.

**Embodiment 5**

Preparation of acrylic polymer A: in a 1 L reactor, the following were added to obtain a reaction mixture: 200 g of monomers (including 90 wt% of isooctyl acrylate, 8.5 wt% of methyl acrylate and 1.5 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was -30 °C.

Preparation of acrylic polymer B: in a 1 L reactor, the following were added to obtain a reaction mixture: 200 g of monomers (including 81 wt%) of isooctyl acrylate and 19 wt% of acrylic acid, based on the total weight of the monomers as 100%) and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 30 °C. The acrylic polymer B had a number average molecular weight of $1 \times 10^6$.

Preparation of the acrylic damping adhesive: in a mixing reactor, the following were added: the solution containing acrylic polymer A and the solution containing acrylic polymer B prepared by the above steps, as well as double-nitrogen pyridine, where based on the weight of the acrylic damping adhesive to be prepared as 100%, the amount of acrylic polymer A in the solution containing acrylic polymer A was 30 wt%; the amount of acrylic polymer B in the solution containing acrylic polymer B was 69.85 wt%; and the amount of double-nitrogen pyridine was 0.15 wt%. The mixture after polymerization was uniformly coated in a thickness of 50 $\mu$m onto a PET release film via a roll coating method. Then the obtained coating was dried for 5 min at 105 °C, to obtain a damping adhesive layer.

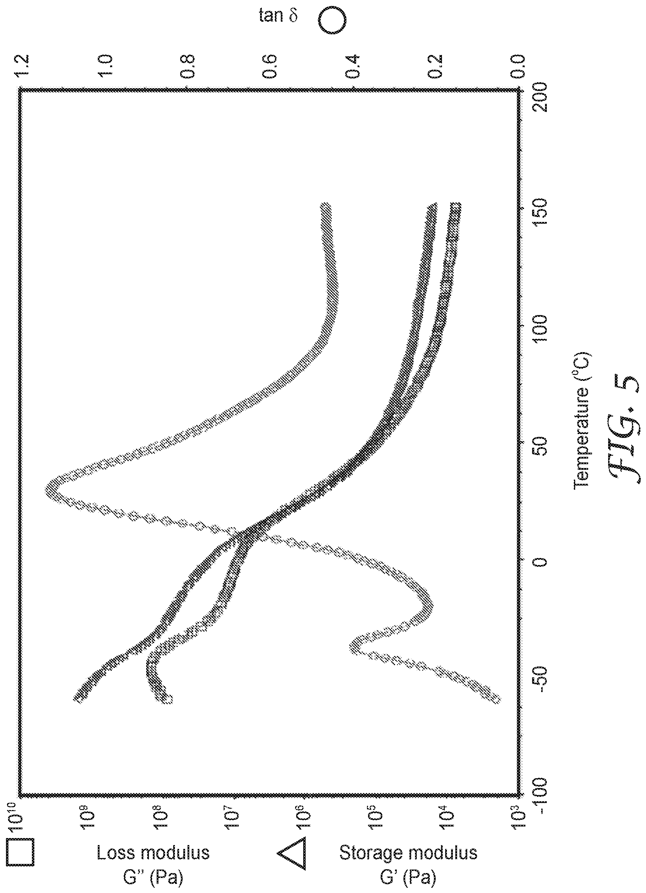

The damping adhesive layer prepared above was tested according to the measuring method for rheological curves as described above. FIG. 5 shows a diagram of the rheological curve of the damping adhesive layer according to Embodiment 5 of the present invention. Results show that the damping adhesive exhibited a stable double-damping peak characteristic in the rheological curve. The results are characterized by loss factors all greater than 0.3 at -35 °C to 60 °C.

The damping adhesive layer prepared above was tested according to the measuring method for double-phase system stability as described above. Results show that the 100 g weight did not fall off within 1000 min, indicating that the damping adhesive has good double-phase system stability.

**Embodiment 6**

Preparation of acrylic polymer A: in a 1 L reactor, the following were added to obtain a reaction mixture: 200 g of monomers (including 41 wt% of butyl acrylate, 55 wt% of methyl acrylate and 4 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was -20 °C.

Preparation of acrylic polymer B: in a 1 L reactor, the following were added to obtain a reaction mixture: 200 g of monomers (including 81 wt% of isooctyl acrylate and 19 wt% of acrylic acid, based on the total weight of the monomers as 100%) and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 30 °C. The acrylic polymer B had a number average molecular weight of $1 \times 10^6$.

Preparation of the acrylic damping adhesive: in a mixing reactor, the following were added: the solution containing acrylic polymer A and the solution containing acrylic polymer B prepared by the above steps, as well as double-nitrogen pyridine, where based on the weight of the acrylic damping adhesive to be prepared as 100%, the amount of acrylic polymer A in the solution containing acrylic polymer A was 25 wt%; the amount of acrylic polymer B in the solution containing acrylic polymer B was 74.85 wt%; and the amount of double-nitrogen pyridine was 0.15 wt%. The mixture after polymerization was uniformly coated in a thickness of 50 μm onto a PET release film via a roll coating method. Then the obtained coating was dried for 5 min at 105 °C, to obtain a damping adhesive layer.

The damping adhesive layer prepared above was tested according to the measuring method for rheological curves as described above. Results show that the damping adhesive exhibited a stable double-damping peak characteristic in the rheological curve. The results are characterized by loss factors all greater than 0.2 at -30 °C to 60 °C.

The damping adhesive layer prepared above was tested according to the measuring method for double-phase system stability as described above. Results show that the 100 g weight did not fall off within 1000 min, indicating that the damping adhesive has good double-phase system stability.

**Comparative Example 1**

Preparation of acrylic polymer A: in a 1 L reactor, the following were added to obtain a reaction mixture: 200 g of monomers (including 90 wt% of isooctyl acrylate and 10 wt% of acrylic acid, based on the total weight of the monomers as 100%), 5 g of isopropanol as a chain transfer agent, and 295 g of ethyl acetate. The reaction mixture was subjected to oxygen removal with nitrogen for 2 min, and then 0.2 g AIBN initiator was added thereto. The reaction mixture was heated to 60 °C and reacted for 4 h, and then heated to 65 °C and reacted for 20 h, so as to obtain a solution containing acrylic polymer A. The glass transition temperature of the acrylic polymer A measured by the testing method for glass transition temperature as described above was 0 °C.

Preparation of acrylic polymer B: in a 1 L reactor, the following were added to obtain a reaction mixture: 200 g of monomers (including 81 wt% of isooctyl acrylate and 19 wt% of acrylic acid, based on the total weight of the monomers as 100%), and 300 g of ethyl acetate. The reaction mixture was subjected to oxygen removal with nitrogen for 2 min, and then 0.2 g BPO initiator was added thereto. The reaction mixture was heated to 58 °C and reacted for 4 h, and then heated to 68 °C and reacted for 20 h, so as to obtain a solution containing acrylic polymer B. The glass transition temperature of the acrylic polymer B measured by the testing method for glass transition temperature as described above was 30 °C. The acrylic polymer B had a number average molecular weight of $1 \times 10^6$.

Preparation of the acrylic damping adhesive: in a mixing reactor, the following were added: the solution containing acrylic polymer A and the solution containing acrylic polymer B prepared by the above steps, as well as isocyanate, where based on the weight of the acrylic damping adhesive to be prepared as 100%, the amount of acrylic polymer A in the solution containing acrylic polymer A was 50 wt%; the amount of acrylic polymer B in the solution containing acrylic polymer B was 49.85 wt%; and the amount of isocyanate was 0.15 wt%. The mixture after polymerization was uniformly coated in a thickness of 50 μm onto a PET release film via a roll coating method. Then the obtained coating was dried for 5 min at 105 °C, to obtain a damping adhesive layer.

The damping adhesive layer prepared above was tested according to the measuring method for rheological curves as described above. Results show that the damping adhesive did not show the double-peak property in the rheological curve and manifested as a single broad peak.

**Claims**

1. An acrylic damping adhesive comprising a crosslinked structure of a carboxy-containing acrylic polymer with a glass transition temperature less than or equal to -20 °C and a carboxy-containing acrylic polymer with a glass transition temperature ranging from 20 °C to 50 °C, wherein the carboxy-containing acrylic polymer with a glass transition temperature ranging from 20°C to 50 °C is obtained by polymerization of an acrylic monomer, called "second acrylic monomer" in the specification, and acrylic acid, and based on the total amount of the second acrylic monomer and the acrylic acid as 100 wt%, the acrylic acid accounts for 15 to 25 wt%, and wherein the glass transition temperatures are determined from rheological data according to the description.

2. The acrylic damping adhesive according to claim 1, wherein the acrylic damping adhesive exhibits double damping peaks in a rheological curve measured according to the description.

3. The acrylic damping adhesive according to claim 1, wherein the damping temperature range, as defined in the description, of the acrylic damping adhesive is greater than or equal to 50 °C as determined from a rheological curve measured according to the description.

4. The acrylic damping adhesive according to claim 1, wherein in the crosslinked structure, based on the weight of the crosslinked structure as 100%, a structural unit derived from the carboxy-containing acrylic polymer with a glass transition temperature less than or equal to -20 °C accounts for 25 to 75 wt%, and a structural unit derived from the carboxy-containing acrylic polymer with a glass transition temperature ranging from 20 °C to 50 °C accounts for 25 to 75 wt%.

5. The acrylic damping adhesive according to claim 1, wherein the carboxy-containing acrylic polymer with a glass transition temperature less than or equal to -20 °C is obtained by polymerization of an acrylic monomer, called "first acrylic monomer" in the specfication, and acrylic acid, and based on the total amount of the first acrylic monomer and the acrylic acid as 100 wt%, the acrylic acid accounts for 0.5 to 5 wt%.

6. The acrylic damping adhesive according to claim 5, wherein the first acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate.

7. The acrylic damping adhesive according to claim 1, wherein the second acrylic monomer is one or a plurality selected from the group consisting of the following: isooctyl acrylate, 2-ethylhexyl acrylate, butyl acrylate, methyl acrylate, ethyl acrylate, hydroxyethyl acrylate, hydroxypropyl acrylate and glycidyl acrylate.

8. The acrylic damping adhesive according to claim 1, wherein the carboxy-containing acrylic polymer with a glass transition temperature ranging from 20 °C to 50 °C has a number average molecular weight greater than or equal to $1 \times 10^6$.

9. A diaphragm membrane for micro-speakers, wherein the diaphragm membrane comprises a damping adhesive layer, the damping adhesive layer comprising the acrylic damping adhesive according to anyone of claims 1 to 8.

10. The diaphragm membrane for micro-speakers according to claim 9, wherein the thickness of the damping adhesive layer is in the range of 3 to 50 $\mu$m.


**Patentansprüche**

1. Ein Acryl-Dämpfungskleber, umfassend eine vernetzte Struktur aus einem carboxyhaltigen Acrylpolymer mit einer Glasübergangstemperatur von weniger als oder gleich -20 °C und einem carboxyhaltigen Acrylpolymer mit einer Glasübergangstemperatur im Bereich von 20 °C bis 50 °C, wobei das carboxyhaltige Acrylpolymer mit einer Glasübergangstemperatur im Bereich von 20 °C bis 50 °C durch Polymerisation eines Acrylmonomers, das in der Patentschrift als "zweites Acrylmonomer" bezeichnet wird, und Acrylsäure erhalten wird, und wobei, bezogen auf die Gesamtmenge des zweiten Acrylmonomers und der Acrylsäure als 100 Gew.-%, die Acrylsäure 15 bis 25 Gew.-% ausmacht, und wobei die Glasübergangstemperaturen gemäß der Beschreibung aus rheologischen Daten bestimmt werden.

2. Der Acryl-Dämpfungskleber nach Anspruch 1, wobei der Acryl-Dämpfungskleber doppelte Dämpfungsspitzen in einer gemäß der Beschreibung gemessenen rheologischen Kurve vorweist.

3. Der Acryl-Dämpfungskleber nach Anspruch 1, wobei der in der Beschreibung definierte Dämpfungstemperaturbereich des Acryl-Dämpfungsklebers größer als oder gleich 50 °C ist, wie bestimmt aus einer gemäß der Beschreibung gemessenen rheologischen Kurve.

4. Der Acryl-Dämpfungskleber nach Anspruch 1, wobei in der vernetzten Struktur, basierend auf dem Gewicht der vernetzten Struktur als 100 %, eine Struktureinheit, die von dem carboxyhaltigen Acrylpolymer mit einer Glasübergangstemperatur von weniger als oder gleich -20 °C abgeleitet ist, 25 bis 75 Gew.-% ausmacht, und eine Struktureinheit, die von dem carboxyhaltigen Acrylpolymer mit einer Glasübergangstemperatur in dem Bereich von 20 °C bis 50 °C abgeleitet ist, 25 bis 75 Gew.-% ausmacht.

5. Der Acryl-Dämpfungskleber nach Anspruch 1, wobei das carboxyhaltige Acrylpolymer mit einer Glasübergangstemperatur von weniger als oder gleich -20 °C durch Polymerisation eines ersten Acrylmonomers, das in der Patentschrift als das "erste Acrylmonomer" bezeichnet wird, und Acrylsäure erhalten wird, und, bezogen auf die Gesamtmenge des ersten Acrylmonomers und der Acrylsäure als 100 Gew.-%, die Acrylsäure 0,5 bis 5 Gew.-% ausmacht.

6. Der Acryl-Dämpfungskleber nach Anspruch 5, wobei das erste Acrylmonomer eines oder eine Mehrzahl, ausgewählt aus der Gruppe bestehend aus den Folgenden ist: Isooctylacrylat, 2-Ethylhexylacrylat, Butylacrylat, Methylacrylat, Ethylacrylat, Hydroxyethylacrylat, Hydroxypropylacrylat und Glycidylacrylat.

7. Der Acryl-Dämpfungskleber nach Anspruch 1, wobei das zweite Acrylmonomer eines oder eine Mehrzahl, ausgewählt aus der Gruppe bestehend aus den Folgenden ist: Isooctylacrylat, 2-Ethylhexylacrylat, Butylacrylat, Methylacrylat, Ethylacrylat, Hydroxyethylacrylat, Hydroxypropylacrylat und Glycidylacrylat.

8. Der Acryl-Dämpfungskleber nach Anspruch 1, wobei das carboxyhaltige Acrylatpolymer mit einer Glasübergangstemperatur in dem Bereich von 20 °C bis 50 °C ein zahlenmittleres Molekulargewicht von größer als oder gleich $1 \times 10^6$ aufweist.

9. Eine Diaphragmamembran für Mikrolautsprecher, wobei die Diaphragmamembran eine dämpfende Kleberschicht umfasst, wobei die dämpfende Kleberschicht den Acryl-Dämpfungskleber nach einem der Ansprüche 1 bis 8 umfasst.

10. Die Diaphragmamembran für Mikrolautsprecher nach Anspruch 9, wobei die Dicke der dämpfenden Kleberschicht in dem Bereich von 3 bis 50 μm liegt.

## Revendications

1. Adhésif acrylique amortissant comprenant une structure réticulée d'un polymère acrylique à teneur en carboxy ayant une température de transition vitreuse inférieure ou égale à -20 °C et un polymère acrylique à teneur en carboxy ayant une température de transition vitreuse allant de 20 °C à 50 °C, dans lequel le polymère acrylique à teneur en carboxy ayant une température de transition vitreuse allant de 20 °C à 50 °C est obtenu par polymérisation d'un monomère acrylique, appelé « second monomère acrylique » dans la spécification, et d'acide acrylique, et sur la base de la quantité totale du second monomère acrylique et de l'acide acrylique en tant que 100 % en poids, l'acide acrylique représente de 15 à 25 % en poids, et dans lequel les températures de transition vitreuse sont déterminées à partir de données rhéologiques selon la description.

2. Adhésif acrylique amortissant selon la revendication 1, dans lequel l'adhésif acrylique amortissant présente des pics d'amortissement doubles dans une courbe rhéologique mesurée selon la description.

3. Adhésif acrylique amortissant selon la revendication 1, dans lequel la plage de température d'amortissement, telle que définie dans la description, de l'adhésif acrylique amortissant est supérieure ou égale à 50 °C, telle que déterminée à partir d'une courbe rhéologique mesurée selon la description.

4. Adhésif acrylique amortissant selon la revendication 1, dans lequel, dans la structure réticulée, sur la base du poids de la structure réticulée en tant que 100 %, un motif structurel issu du polymère acrylique à teneur en carboxy ayant une température de transition vitreuse inférieure ou égale à -20 °C représente de 25 à 75 % en poids, et un motif structurel issu du polymère acrylique à teneur en carboxy ayant une température de transition vitreuse allant de 20 °C à 50 °C représente de 25 à 75 % en poids.

5. Adhésif acrylique amortissant selon la revendication 1, dans lequel le polymère acrylique à teneur en carboxy ayant une température de transition vitreuse inférieure ou égale à -20 °C est obtenu par polymérisation d'un monomère acrylique, appelé « premier monomère acrylique » dans la spécification, et d'acide acrylique, et sur la base de la quantité totale du premier monomère acrylique et de l'acide acrylique en tant que 100 % en poids, l'acide acrylique représente de 0,5 à 5 % en poids.

6. Adhésif acrylique amortissant selon la revendication 5, dans lequel le premier monomère acrylique est un ou une pluralité choisi dans le groupe constitué de ce qui suit : acrylate d'isooctyle, acrylate de 2-éthylhexyle, acrylate de butyle, acrylate de méthyle, acrylate d'éthyle, acrylate d'hydroxyéthyle, acrylate d'hydroxypropyle et acrylate de glycidyle.

7. Adhésif acrylique amortissant selon la revendication 1, dans lequel le second monomère acrylique est un ou une pluralité choisi dans le groupe constitué de ce qui suit : acrylate d'isooctyle, acrylate de 2-éthylhexyle, acrylate de butyle, acrylate de méthyle, acrylate d'éthyle, acrylate d'hydroxyéthyle, acrylate d'hydroxypropyle et acrylate de glycidyle.

8. Adhésif acrylique amortissant selon la revendication 1, dans lequel le polymère acrylique à teneur en carboxy ayant une température de transition vitreuse allant de 20 °C à 50 °C a une masse moléculaire moyenne en nombre supérieure ou égale à $1 \times 10^6$.

9. Membrane de diaphragme pour micro-haut-parleurs, dans laquelle la membrane de diaphragme comprend une couche d'adhésif amortissant, la couche d'adhésif amortissant comprenant l'adhésif acrylique amortissant selon l'une quelconque des revendications 1 à 8.

10. Membrane de diaphragme pour micro-haut-parleurs selon la revendication 9, dans laquelle l'épaisseur de la couche d'adhésif amortissant va de 3 à 50 μm.

*FIG. 1*

FIG. 2

*FIG. 3*

FIG. 4

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014052463 A1